# EUROPEAN PATENT APPLICATION

(11) **EP 1 411 417 A2**
(43) Date of publication of application: **21.04.2004**
(21) Application number: 03017799.2
(22) Date of filing: 04.08.2003
(51) Int. Cl.: G06F 1/20, H05K 7/20

(54) **Electronic apparatus having a heat-radiating portion at the back of the display panel**

(30) Priority: 15.10.2002 JP 2002300928
(71) Applicant: Kabushiki Kaisha Toshiba, Tokyo (JP)
(72) Inventor: Tomioka, Kentaro, 1-1 Shibaura 1-chome Minato-ku Tokyo 105 (JP); Hisano, Katsumi, 1-1 Shibaura 1-chome Minato-ku Tokyo 105 (JP); Takamatsu, Tomonao, 1-1 Shibaura 1-chome Minato-ku Tokyo 105 (JP); Tanimoto, Mitsuyoshi, 1-1 Shibaura 1-chome Minato-ku Tokyo 105 (JP); Kusaka, Hiroyuki, 1-1 Shibaura 1-chome Minato-ku Tokyo 105 (JP); Kinoshita, Teruo, 1-1 Shibaura 1-chome Minato-ku Tokyo 105 (JP)
(74) Representative: Henkel, Feiler & Hänzel

(57) **Abstract**

An electronic apparatus (1) comprising a housing (7), a display panel (8) provided in the housing (7) and having a back wall (8b), and a heat-radiating portion (30) provided in the housing (8) to radiate the heat generated by a heat-generating component (23).
The heat-radiating portion (30) opposes the back wall (8b) of the display panel (8a). The display panel (8) and the heat-radiating portion (30) are coupled to each other by support members (55, 56). The support members (55, 56) hold the display panel (8) and the heat-radiating portion (30) at specific positions in the housing (7).

## Description

The present invention relates to a liquid-cooled electronic apparatus that has a heat-radiating portion provided at the back of a display panel and is designed to radiate heat from, for example, a CPU. More particularly, the invention relates to a structure that secures the display panel and the heat-radiating portion within a housing of the electronic apparatus.

A CPU is incorporated in, for example, notebook-type portable computers. The heat the CPU generates while operating is increasing as its data-processing speed rises and it performs more and more functions. The higher the temperature of the CPU, the less efficiently it operates. To cool the CPU, so-called "cooling systems of liquid cooling type" have been developed in recent years. A liquid-cooling system uses a liquid coolant that has a far higher specific heat than air.

Jpn. Pat. Appln. KOKAI Publication No. 7-142886 discloses a cooling system of liquid cooling type, configured for use in portable computers that comprise a main unit and a display unit. The cooling system comprises a heat-receiving header, hear-radiating header, and two tubes. The heat-receiving header is provided in the main unit and is thermally connected to the CPU incorporated in the main unit. The heat-radiating header is provided in the display unit and is located at the back of the display panel incorporated in the display unit. Both tubes extend from the main unit to the display unit to circulate the liquid coolant between the heat-receiving header and the heat-radiating header.

In this cooling system, the liquid coolant in the heat-receiving header absorbs the heat generated by the CPU. That is, the coolant is heated in the heat-receiving header. The coolant thus heated is transferred via the first tube into the heat-radiating header. The heat-radiating header radiates the heat generated by the CPU, as the coolant flows through it. The coolant is therefore cooled in the heat-radiating header. The coolant thus cooled is transferred via the second tube, back into the heat-receiving header. Back in the heat-receiving header, the coolant again absorbs the heat from the CPU. As the coolant is thus circulated, the heat is transmitted from the CPU to the heat-radiating header with high efficiency and the heat-radiating header radiates the heat. This enhances the efficiency of cooling the CPU.

The display unit of the portable computer has a housing shaped like a box. The display panel and the heat-radiating header are secured to the housing. In assembling the display unit, the display panel and the heat-radiating header need to be brought into the housing, one after the other. This increases the number of assembling steps. Accordingly, it takes much time to assemble the display unit.

In the display unit of this structure, those parts of the housing and display panel, which are secured to each other, inevitably differ in size, and so are those parts of the housing and the heat-radiating header, which are secured to each other. If the dimensional tolerance between the housing and the display panel is too great, the display panel will be displaced. If the dimensional tolerance between the housing and the heat-radiating portion is too large, the heat-radiating portion will be displaced. As a consequence, the heat-radiating portion will be located too close to the display panel or will contact the display panel in the worst case.

An object of this invention is to provide an electronic apparatus in which the display panel and the heat-radiating portion can easily be incorporated in to the housing and precisely located at in a desired positional relation.

To achieve the object, an electronic apparatus according to an aspect of this invention comprises: a housing; a display panel provided in the housing and having a back wall; a heat-generating component provided in the housing; a heat-radiating portion provided in the housing, opposing the back wall of the display panel and radiating heat generated by the heat-generating component; and support members which couple the heat-radiating portion to the display panel and hold the display panel and heat-radiating panel in the housing.

Thus, the display panel and the heat-radiating portion can be coupled together, forming a unit. This unit is then incorporated into the housing. This enhances the efficiency of assembling the electronic apparatus. Further, this ensures a precise positional relation between the display panel and the heat-radiating portion. The display panel and the heat-radiating portion are therefore held at prescribed positions in the housing.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of a portable computer according to a first embodiment of the present invention;
FIG. 2 is a perspective view of the portable computer according to an embodiment of the invention, illustrating the positional relation of the display housing and the heat-radiating portion;
FIG. 3 is a perspective view of the portable computer according to an embodiment of the invention, schematically showing the positional relation between the cooling unit of liquid cooling type and the liquid crystal display panel;
FIG. 4 is a sectional view of the portable computer according to an embodiment of the invention, illustrating the cooling unit of liquid cooling type;
FIG. 5 is a sectional view, depicting the heat-receiving portion and the pump, both fixed on the printed circuit board;
FIG. 6 is a sectional view of the heat-radiating portion provided in an embodiment of the invention;
FIG. 7 is a perspective view of an embodiment of this invention, illustrating the positional relation between the liquid crystal display panel, heat-radiating portion and support member;
FIG. 8 is a sectional view of the display unit provided in an embodiment of the invention, showing the junction between the support member and the display cover;
FIG. 9 is a sectional view of the display unit used in an embodiment of this invention, illustrating the junction between the support member and a side wall of the display cover; and
FIG. 10 is a sectional view of the display unit incorporated in an embodiment of the present invention, depicting the junction between the support member and the heat-radiating portion.

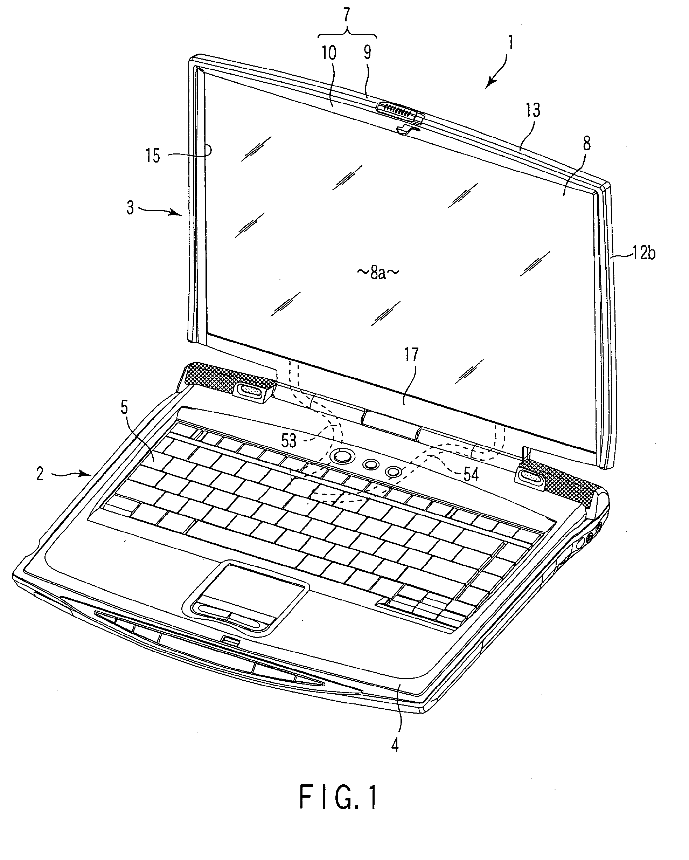

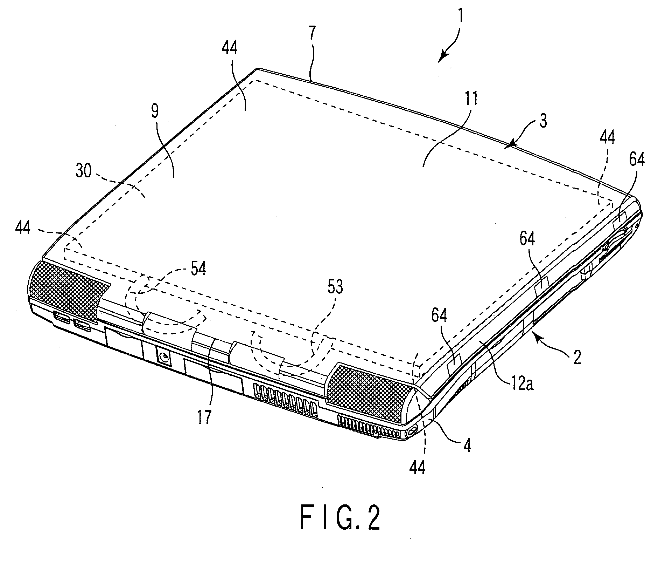

An embodiment of this invention will be described, with reference to FIGS. 1 to 10.

FIGS. 1 to 4 show a portable computer 1, or an electronic apparatus according to this invention. The portable computer 1 comprises a computer main unit 2 and a display unit 3. The computer main unit 2 has a first housing 4 that is shaped like a flat box. A keyboard 5 is arranged on the top of the first housing 4.

The display unit 3 comprises a display housing 7, or the second housing, and a liquid crystal display panel 8. The display housing 7 is shaped like a flat box and incorporates the liquid crystal display panel 8. The display housing 7 has a display cover 9 and a display mask 10. The cover 9 and mask 10 are made of synthetic resin.

The display cover 9 comprises a back wall 11, left sidewall 12a, right sidewall 12b, top wall 13 and bottom wall 14. The sidewalls 12a and 12b, top wall 13 and bottom wall 14 protrude from the edges of the back wall 11; they are outer peripheral walls of the display housing 7. The display mask 10 is fitted in the display cover 9 and opposes the back wall 11. The display mask 10 has a rectangular opening 15.

The liquid crystal display panel 8 has a screen 8a for displaying images. The screen 8a is exposed outside the housing 7, through the opening 15. In other words, the display cover 9 and display mask 10 covers the liquid crystal display panel 8, except the screen 8a.

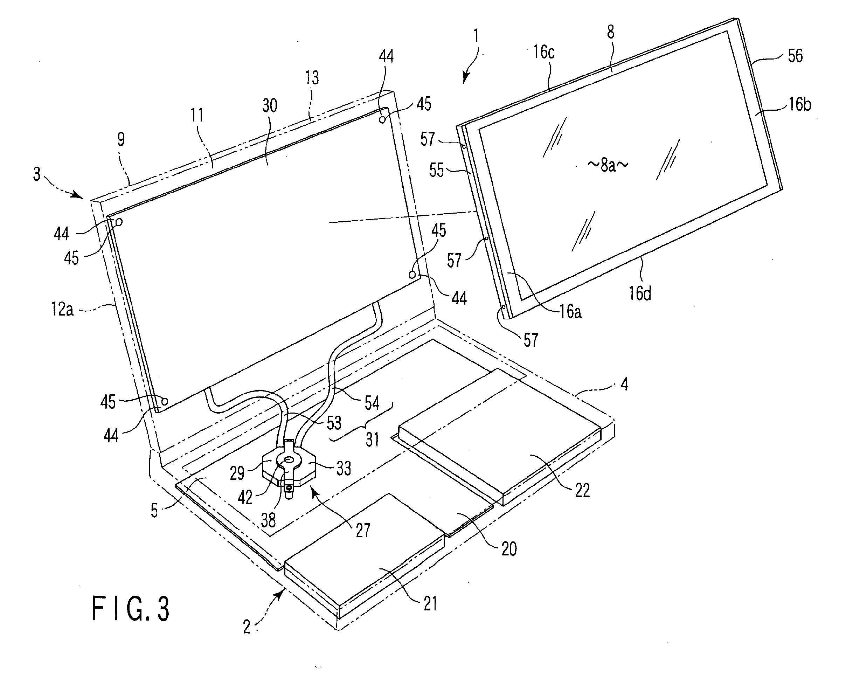

As FIG. 3 shows, the liquid crystal display panel 8 is a rectangular plate and has a left edge 16a, right edge 16b, upper edge 16c and lower edge 16d. The four edges 16a to 16d surround the screen 8a. The left edge 16a and right edge 16b are spaced apart in the widthwise direction of the display housing 7. They oppose the inner surfaces of the sidewalls 12a and 12b of the display cover 9, respectively.

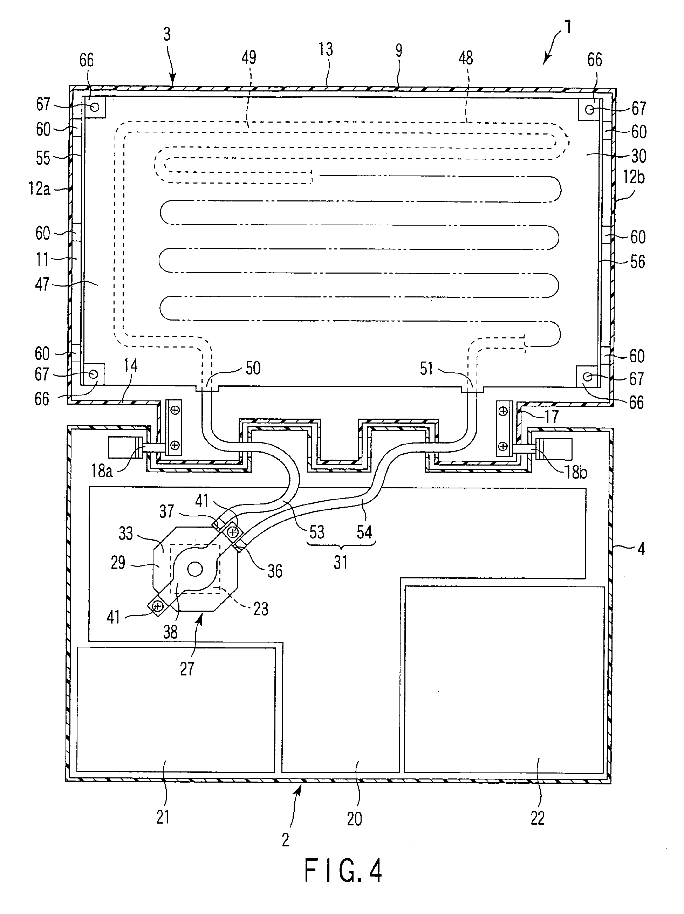

The display housing 7 has a leg portion 17. The leg portion 17 protrudes from that part of the housing 7 which opposes the bottom wall 14 of the display cover 9. As FIG. 4 shows, a pair of hinges 18a and 18b couple the leg portion 17 to the rear edge of the housing 4. Thus, the display unit 3 can be rotated between a closed position and an opened position. At the closed position, the display unit 3 lies over the housing 4, covering the keyboard 5. At the opened position, the display unit 3 stands up, exposing the keyboard 5 and the screen 8a of the liquid crystal display panel 8.

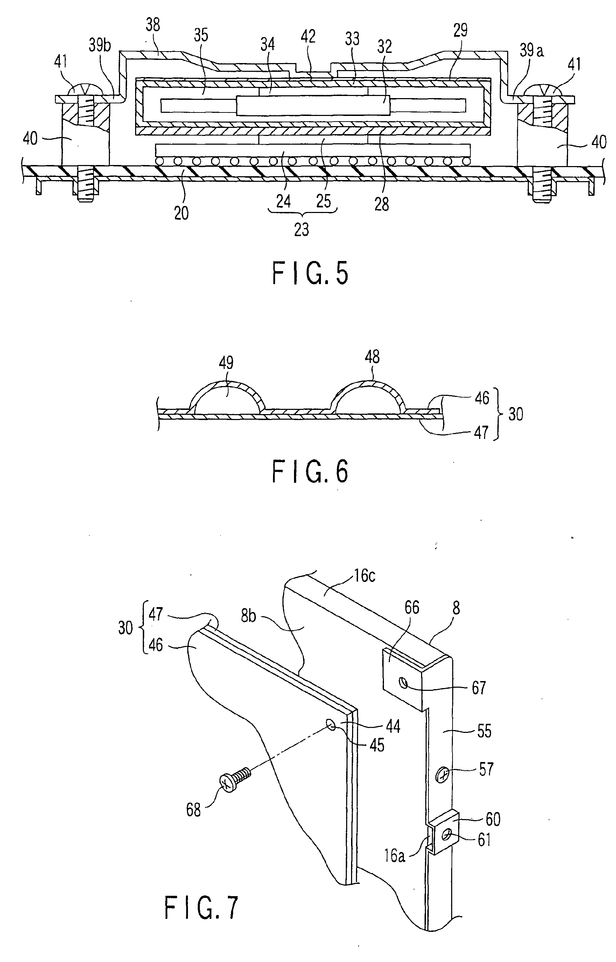

The housing 4 contains a printed circuit board 20, a hard disk drive 21, and a CD-ROM drive 22. As FIG. 5 shows, a semiconductor package 23 of BGA type is mounted on the upper surface of the printed circuit board 20. The package 23, which is a heat-generating component, constitutes a CPU that is the brain of the portable computer 1. The semiconductor package 23 has a square base 24 and an IC chip 25. The IC chip 25 is mounted on the center part of the base 24. The heat the IC chip 25 generates while operating is enormous, because the chip 25 operates at high speed and performs many functions. The IC chip 25 needs to be cooled to keep operating in a stable condition.

As shown in FIGS. 3 and 4, the portable computer 1 further comprises a cooling unit 27 of liquid cooling type for cooling the semiconductor package 23. The cooling unit 27 comprises a heat-receiving portion 28, a rotary pump 29, a heat-radiating portion 30, and a circulation path 31.

The heat-receiving portion 26 is a metal plate larger than the base 24 of the semiconductor package 23, as is illustrated in FIG. 5. It covers the IC chip 25 from above. The IC chip 25 is thermally connected to the lower surface of the heat-receiving portion 28, at the center part thereof.

The pump 29 is formed integral with the heat-receiving portion 28. The pump 29 comprises an impeller 32 and a pump housing 33. The impeller 32 is connected to a flat motor 34, which is supported on the pump housing 33. The flat motor 34 starts rotating the impeller 32 when the power switch to the portable computer 1 is closed or when the temperature of the semiconductor package 23 rises to a preset value.

The pump housing 33 is shaped like a flat box. It is made of heat-conductive metal such as aluminum alloy. It is laid on the upper surface of the heat-receiving portion 28 and hence thermally connected to the heat-receiving portion 28. The housing 33 has a pump chamber 35, an inlet port 36, and an outlet port 37. Both ports 36 and 37 are connected to the pump chamber 35 and extend backwards and slantwise, toward the junction between the first housing 4 and leg portion 17.

A support strip 38 fastens the pump 29 to the upper surface of the printed circuit board 20. The support strip 38 is a leaf spring and can be elastically deformed. It has two ends 39a and 39b. Screws 41 fasten the ends 39a and 39b of the support strip 38 to a pair of stud pins 40 that are secured to the printed circuit board 20. Since the ends 39a and 39b of the support strip 38 are so fastened to the board 20, a pushing projection 42 of the strip 38 abuts on the upper surface of the pump housing 33, at the center part thereof. The projection 42 pushes the heat-receiving portion 28 onto the semiconductor package 23.

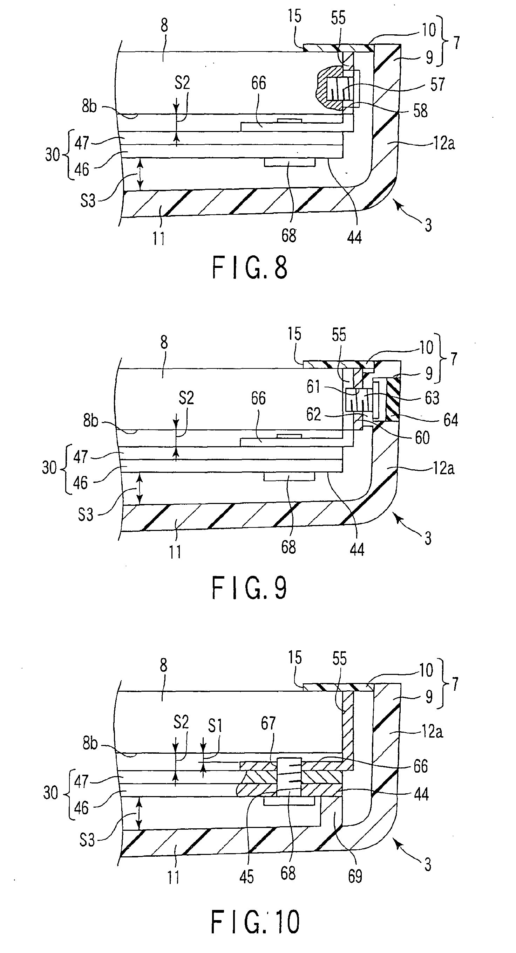

As FIGS. 3 and 8 show, the heat-radiating portion 30 of the cooling unit 27 is interposed between the back wall 11 of the display cover 9 and a back wall 8b of the liquid crystal display panel 8. The heat-radiating portion 30 is rectangular, as large as the liquid crystal display panel 8. The heat-radiating portion 30 has four corners 44, which have a through hole 45 each.

As shown in FIG. 6, the heat-radiating portion 30 comprises two heat-radiating plates 46 and 47. Both heat-radiating plates 46 and 47 are made of metal that excels in heat conductivity. They are laid, one upon the other.

The first heat-radiating plate 46 has a bulging part 48 that protrude away from the second head-radiating plate 47. The bulging part 48 meanders and has a U-shaped cross section. It opens to the second head-radiating plate 47. The second heat-radiating plate 47 closes the opening of the bulging part 48. Hence, the bulging part 48 and the second heat-radiating plate 47 define a coolant path 49 that meanders.

As shown in FIG. 4, the heat-radiating portion 30 has a coolant inlet port 50 and a coolant outlet port 51. The coolant inlet port 50 is located at the upstream end of the coolant path 49. The coolant outlet port 51 is provided at the downstream end of the coolant path 49. The ports 50 and 51 oppose the leg 17 of the display housing 7. They are spaced apart in the widthwise direction of the display housing 7.

The circulation path 31 of the cooling unit 27 comprises two pipes 53 and 54. The first pipe 53 connects the coolant outlet port 37 of the pump 29 to the coolant inlet port 50 of the heat-radiating portion 30. The first pipe 53 first extends from the pump 29 to the rear edge of the housing 4 and then into the housing 7 through the leg 17. The second pipe 54 connects the coolant inlet port 36 of the pump 29 to the coolant output port 51 of the heat-radiating portion 30. The second pipe 54 first extends from the pump 29 to the rear edge of the housing 4 and into the display housing 7 through the leg 17.

The pump chamber 35 of the pump 29, the coolant path 49 of the heat-radiating portion 30, and the circulation path 31 are filled with liquid coolant (or cooling medium). The liquid coolant may be, for example, an antifreeze prepared by an ethylene glycol solution and, if necessary, corrosion inhibitor, to water.

The display cover 9 of the display housing 7 supports the liquid crystal display panel 8 and the heat-radiating portion 30 of the cooling unit 27, as will be described with reference to FIGS. 3 and 4 and FIGS. 7 to 10.

As FIG. 3 illustrates, support members 55 and 56, both made of metal, are secured to the left edge 16a and right edge 16b of the liquid crystal display panel 8, respectively. The support members 55 and 56 extend over the entire lengths of the edges 16a and 16b and fastened thereto by means of screws 57. Thus, the support members 55 and 56 are arranged, extending along the sidewalls 12a and 12b of the liquid crystal display panel 8, respectively.

FIG. 8 shows the junction between the liquid crystal display panel 8 and the support member 55 (one of the support members 55 and 56). The support member 55 has through holes 58, though which screws 57 passes. The holes 58 are elongated, extending in the direction of thickness of the liquid crystal display panel 8. The other support member 56 has through holes (not shown), too, in which screws 58 passes. Hence, the support members 55 and 56 can be slightly moved in the direction of thickness of the panel 8 by loosening the screws 58, to be adjusted in position to the liquid crystal display panel 8.

As seen from FIGS. 7 and 9, the support members 55 and 56 have a plurality of seats 60 each. The seats 60 are spaced apart in the lengthwise direction of the support members 55 and 56. They protrude toward the sidewalls 12a and 12b of the display cover 9. Each seat 60 has a screw hole 61 cut in the center part. The sidewalls 12a and 12b have a plurality of recesses 62 each. The recesses 62 of each sidewall are aligned with the seats 60 of one support member along which the side wall extends. The bottoms of the recesses 62 lie within the display cover 9 and abut on the seats 60.

As FIG. 9 depicts, screws 63 fasten the support members 55 and 56 are fixed to the sidewalls 12a and 12b of the display cover 9. The screws 63 pass through the bottoms of the recesses 62 and are driven into the screw holes 61 of the seats 60. Thus, the support members 55 and 56 support the edges 16a and 16b of the liquid crystal display panel 8.

The recesses 56 open outside the sidewalls 12a and 12b. Covers 64 made of rubber close the recesses 56 and conceal the heads of the screws 63.

As FIGS. 4, 7 and 10 show, the support members 55 and 56 have two flanges 66 each, at the ends. The flanges 66 have been formed by bending the end portions of a single plate. The flanges 66 are located at the corners 44 of the heat-radiating portion 30, each interposed between the heat-radiating portion 30 and the back wall 8b of the liquid crystal display panel 8. Between the heat-radiating portion 30 and the back wall 8b there is provided a first gap S1 that serves to adjust the positions of the support members 55 and 56 with respect to the liquid crystal display panel 8. Each flange 66 has a screw hole 67. Note that the screw holes 67 lie in axial alignment with the through holes 45 made in the corners 44 of the heat-radiating portion 30, respectively.

The heat-radiating portion 30 is provided at the back of the liquid crystal display panel 8, with the second heat-radiating plate 47 opposing the back wall 8b of the panel 8. The corners 44 of the heat-radiating portion 30 are laid upon those sides of the flanges 66 which face away from the screen 8a of the panel 8. The corners 44 are secured to the flanges 66 by screws 68. The screws 68 are driven into the screw holes 67, extending through the holes 45 made in the corners 44.

The heat-radiating portion 30 is thereby fixed to the support members 55 and 56 and arranged in parallel to the liquid crystal display panel 8. Between the second heat-radiating plate 47 of the heat-radiating portion 30 and the back wall 8b of the panel 8 there is provided a second gap S2 that ensures heat insulation. The second gap S2 enhances the natural air-cooling efficiency of the heat-radiating portion 30. The size of the second gap S2 is determined by the thickness of the flanges 66 and the size of the first gap S1.

As FIGS. 8 to 10 show, a third gap S3 is provided between the heat-radiating portion 30 and the back wall 11 of the display cover 9. The third gap S3 increases the heat-radiating efficiency of the heat-radiating portion 30. The inner surface of the back wall 11 of the display cover 9 is exposed to the third gap S3. A projection 69 is formed on the inner surface of the back wall 11. The projection 69 extends toward the heat-radiating portion 30. Its distal end abuts on the first heat-radiating plate 46 of the heat-radiating portion 30. In other words, the projection 69 supports the back wall 11 from within the display housing 7. This prevents the back wall 11 from being deformed when the housing 7 is grabbed with hands.

While the portable computer 1 thus constructed is being used, the IC chip 25 of the semiconductor package 23 generates heat. The heat generated by the IC chip 25 propagates to the pump housing 33 through the heat-receiving portion 28. The liquid coolant filled in the pump chamber 35 that is provided in the pump housing 33 absorbs most of the heat transferred to the pump housing 33.

When the impeller 32 of the pump 29 rotates, the liquid coolant is forced from the pump chamber 35 into the heat-radiating portion 30 via the first pipe 53. The liquid coolant is therefore made to circulate between the pump chamber 35 and the coolant path 49 of the heat-radiating portion 30.

More precisely, the liquid coolant heated in the pump chamber 35 is guided to the heat-radiating portion 30 through the first pipe 50 and then flows through the meandering coolant path 49. While flowing through the coolant path 49, the liquid coolant releases the heat. The heat diffuses in the first heat-radiating plate 46 and second heat-radiating plate 47. The plates 46 and 47 radiate the heat from their surfaces.

Therefore, the liquid coolant is cooled as it passes through the coolant path 49. The coolant thus cooled is supplied back into the pump chamber 35 of the pump 22 through the second pipe 54. As the coolant flows in the pump chamber 35, it absorbs heat from the IC chip 25 again and transferred to the heat-radiating portion 30. As the liquid coolant is thus circulated, the heat of the IC chip 25 is transferred to the heat-radiating portion 30 provided in the display housing 7. The heat is radiated from the heat-radiating portion 30 and hence from the portable computer 1.

In the portable computer 1 having a cooling system of liquid cooling type, the liquid crystal display panel 8 and the heat-radiating portion 30 are fastened to the support members 55 and 56 by means of screws 57 and 68. Thus, the display panel 8 and the heat-radiating portion 30 can be coupled together, forming a unit. This unit is then incorporated into the display cover 9. This renders it easier to assemble the display unit 3 than in the case where the display panel 8 and the heat-radiating portion 30 are secured, one by one, to the display cover 9.

As indicated above, the support members 55 and 56 have two flanges 66 each, at the ends. The flanges 66 are interposed between the back wall 8b of the panel 8 and the heat-radiating portion 30. So positioned, the flanges 66 can define the second gap S2 with high precision, between the back wall 8b and the portion 30. In other words, the flanges 66 adjust the second gap S2, imparting a sufficient natural cooling efficiency to the heat-radiating portion 30. Heat can therefore be efficiently radiated from the liquid crystal display panel 8. Hence, the influence of heat on the panel 8, i.e., a component not so resistant to heat, can be minimized. The liquid crystal display panel 8 can be prevented from being over-heated, though it is adjacent to the heat-radiating portion 30.

The liquid crystal display panel 8 can be displaced with respect to the support members 55 and 56, in its direction of thickness. More correctly, the panel 8 can be moved toward and away from the flanges 66 of the support members 55 and 56. Thus, it is possible to adjust the first gap S1 to any desired size.

Hence, the second gap S2 that achieves heat insulation can be adjusted, without changing the thickness of the flanges 66. Dimensional tolerances, if any, of the support members 55 and 56, liquid crystal display panel 8 and heat-radiating portion 30, can be compensated for, because the panel 8 can be moved toward and away from the flanges 66. This also helps to adjust the second gap S2 easily.

The projection 69 protruding from the back wall 11 of the display cover 9 abuts on the heat-radiating portion 30. The projection 69 therefore guides part of heat from the heat-radiating portion 30 to the display cover 9. This enhances the heat-radiating efficiency of the portion 30 and ultimately decreases the influence that the heat imposes on the liquid crystal display panel 8.

The heat can be efficiently diffused from the heat-radiating portion 30 into the display cover 9 if the display cover 9 is made of metal that excels in thermal conductivity. The display cover 9 can therefore be used as a heat sink, which enhances the heat-radiating efficiency of the portion 30.

In the embodiment described above, the support members 55 and 56 are secured to the left edge 16a and right edge 16b of the liquid crystal display panel 8, respectively. In the present invention, the support members 55 and 56 may be replaced with a rectangular frame that surrounds the liquid crystal display panel 8.

The electronic apparatus according to this invention is not limited to a portable computer. Rather, the apparatus may be an information-processing apparatus of any other type.

## Claims

1. An electronic apparatus comprising:
a housing (7);
a display panel (8), provided in the housing (7) and having a back wall (8b);
a heat-radiating portion (30), provided in the housing (7), opposing the back wall (8b) of the display panel (8) and radiating heat generated by a heat-generating component (23); and
support members (55, 56) to couple the heat-radiating portion (30) to the display panel (8) and hold the display panel (8) and heat-radiating portion (30) in the housing (7).

2. The electronic apparatus according to claim 1, **characterized in that** the heat-radiating portion (30) includes a heat-radiating plate (46, 47), having a size corresponding to that of the display panel (8), and a coolant path (49), provided in the heat-radiating plate (46, 47) and in which liquid coolant flows.

3. The electronic apparatus according to claim 1 or 2, **characterized in that** the display panel (8) has a pair of side edges (16a, 16b), the support members (55, 56) being secured to the side edges (16a, 16b), respectively, and the support members (55, 56) each having a plurality of flanges (66) which are interposed between the back wall (8b) of the display panel (8) and the heat-radiating portion (30), and the heat-radiating portion (30) is secured to the flanges (66).

4. The electronic apparatus according to any one of claims 1 to 3, **characterized in that** the housing (7) includes a rear wall (11) opposing the heat-radiating portion (30) and a plurality of outer peripheral walls (12a, 12b, 13, 14) surrounding the display panel (8) and the heat-radiating portion (30), and the support members (55, 56) are secured to the outer peripheral walls (12a, 12b) of the housing (7).

5. The electronic apparatus according to claim 3, **characterized in that** the flanges (66) of the support members (55, 56) define a heat insulation gap (S2) between the back wall (8b) of the display panel (8) and the heat-radiating portion (30).

6. The electronic apparatus according to claim 5, **characterized in that** the support members (55, 56) support the display panel (8), to allow the display panel (8) to move toward and away from the flanges (66).
